# EUROPÄISCHE PATENTANMELDUNG

(11) **EP 4 675 378 A1**
(43) Veröffentlichungstag der Anmeldung: **07.01.2026**
(21) Anmeldenummer: 24186015.4
(22) Anmeldetag: 02.07.2024
(51) Int. Cl.: G05B 19/05

(54) **VERFAHREN UND SYSTEM ZUR ERHÖHUNG DER VERFÜGBARKEIT EINER ANLAGE**

(71) Anmelder: Siemens Aktiengesellschaft, 80333 München (DE)
(72) Erfinder: Becker, Stefan, 91325 Adelsdorf (DE); Falk, Rainer, 85435 Erding (DE); Feist, Christian Peter, 80689 München (DE); Haasch, Axel, 91056 Erlangen (DE); Seeger, Guido, 91083 Baiersdorf (DE)
(74) Vertreter: Siemens Patent Attorneys

(57) **Zusammenfassung**

Die vorliegende Erfindung betrifft ein Verfahren und ein System zur Erhöhung der Verfügbarkeit einer Anlage mit den Schritten: Erkennen einer bestehenden oder drohenden Beeinträchtigung einer Betriebsfunktionsfähigkeit mindestens eines Anlagengerätes der im Betrieb befindlichen Anlage; und Übernehmen von Betriebsfunktionen der von der Beeinträchtigung der Betriebsfunktionsfähigkeit betroffenen Anlage durch mindestens eine virtuelle speicherprogrammierbare Steuerung eines mit der Anlage verbundenen Backup-Systems ohne den laufenden Betrieb der Anlage zu unterbrechen.

## Beschreibung

Die vorliegende Erfindung betrifft ein Verfahren und ein System zur Erhöhung der Verfügbarkeit und der Widerstandsfähigkeit einer Anlage, insbesondere einer industriellen Produktionsanlage.

Durch Cyberangriffe kann es bei Anlagen, insbesondere bei Industrieanlagen, zu einer Beeinträchtigung der Verfügbarkeit der Anlage kommen. Diese Angriffe richten sich meist gezielt auf bestimmte Automatisierungskomponenten einer Anlage. Mit herkömmlichen sogenannten H-Systemen kann eine identische Komponentenstruktur als Backup zur Verfügung gestellt werden. Diese können bei einem Cyberangriff einspringen, um die Verfügbarkeit der betroffenen Anlage sicherzustellen. Auch gängige Defense-in-Depth-Maßnahmen, insbesondere physikalische Sicherheitsmaßnahmen und Maßnahmen zur Erhöhung der Netzwerksicherheit und der Systemintegrität, können in der Anlage eingesetzt werden. Weiterhin können Security-Funktionalitäten in den Geräten der Anlage vorgesehen werden, um Angriffe abzuwehren.

Vor diesem Hintergrund liegt der vorliegenden Erfindung die Aufgabe zugrunde, die Verfügbarkeit einer Anlage sicherzustellen.

Erfindungsgemäß wird diese Aufgabe durch ein Verfahren mit den Merkmalen des Patentanspruchs 1 und/oder durch ein Backup-System mit den Merkmalen des Patentanspruches 12 gelöst.

Die Erfindung schafft demnach gemäß einem ersten Aspekt ein Verfahren zur Erhöhung der Verfügbarkeit einer Anlage mit den Schritten:
Erkennen einer bestehenden oder drohenden Beeinträchtigung einer Betriebsfunktionsfähigkeit mindestens eines Anlagengerätes der im Betrieb befindlichen Anlage; und
Übernehmen von Betriebsfunktionen der von der Beeinträchtigung der Betriebsfunktionsfähigkeit betroffenen Anlage durch mindestens eine virtuelle speicherprogrammierbare Steuerung (vPLC) eines mit der Anlage verbundenen Backup-Systems ohne den laufenden Betrieb der Anlage zu unterbrechen.

Die Erfindung schafft gemäß einem weiteren Aspekt ein Backup-System zur Erhöhung der Verfügbarkeit mindestens einer Anlage, wobei das Backup-System mindestens eine virtuelle speicherprogrammierbare Steuerung (vPLC) aufweist, die dazu ausgelegt ist, die Steuerung von Betriebsfunktionen der Anlage nahtlos zu übernehmen ohne den laufenden Betrieb der Anlage zu unterbrechen, sobald eine bestehende oder drohende Beeinträchtigung einer Betriebsfunktionsfähigkeit der jeweiligen Anlage erkannt wird.

Eine virtuelle speicherprogrammierbare Steuerung vPLC weist eine als Software realisierte Automatisierungskomponente zum Steuern eines Automatisierungsprozesses innerhalb der Anlage auf. Eine virtuelle speicherprogrammierbare Steuerung ist eine Softwarekomponente, die die Funktionen einer physischen speicherprogrammierbaren Steuerung in einer virtuellen Umgebung nachbildet.

Die der vorliegenden Erfindung zugrundeliegende Idee besteht darin, ein Ersatz- oder Notfallsystem zum Einsatz zu bringen, sobald das Hauptsystem infiziert ist, um die Verfügbarkeit der Anlage bzw. die Produktion des Betriebes aufrechtzuerhalten. Hierzu wird im Falle eines erfolgreichen Angriffs eine sich im Backup befindende virtuelle Steuerung eingesetzt, die die Automatisierungsfunktionen übernimmt und die Verfügbarkeit der Anlage zumindest übergangsweise sicherstellt.

Es handelt sich hierbei nicht unbedingt um einen vollständigen Ersatz des Hauptsystems bzw. aller Funktionen der Anlage, sondern in den meisten Fällen vor allem um das Sicherstellen von essentiellen Funktionen bzw. Betriebsbasisfunktionen der betroffenen Anlage. Auch die Übernahme von Gesamtfunktionen ist möglich, die nicht die gleiche Latenz haben, jedoch gut genug agieren können, um die Verfügbarkeit der Anlage sicherzustellen.

Mit Hilfe des erfindungsgemäßen Verfahrens wird die Verfügbarkeit der Anlage sichergestellt und die entsprechende Komponente im Falle eines erfolgreichen Angriffs adäquat geschützt, ohne erneut vom gleichen Angriffsszenario betroffen zu werden.

Damit können mit Hilfe des erfindungsgemäßen Verfahrens Betriebsfälle wie z.B. Life Patching ermöglicht werden, das heißt es werden Software-Updates auf die Automatisierungsgeräte der Anlage aufgespielt, während diese weiter im "Run" betrieben werden. Die Produktion einer Produktionsanlage läuft kontinuierlich weiter und wird nicht für das Aufspielen der Updates unterbrochen.

Weitere Fälle für den Einsatz der virtuelle speicherprogrammierbare Steuerung vPLC können z.B. die unterbrechungsfreie Wartung der Anlage sein oder ein kompletter Remote Zugriff, um die Automatisierungsfunktionen der Anlage sicherzustellen und via Fernkontrolle bedienen zu können.

Die eingesetzte virtuelle speicherprogrammierbare Steuerung vPLC kann darüber hinaus auch als "shared Backup" verwendet werden. Das heißt, sie ist bei dieser Ausführungsform als Reservesystem gleich für mehrere Anlagen zuständig, also ein generisches Ersatzsystem, das je nach Bedarf für eine betroffene Anlagenkomponente (z.B. Maschine) herangezogen wird. Eine Voraussetzung, um dies sicherzustellen, besteht darin, dass ein verlässliches Umschalten auf die jeweilige IO-Schnittstelle (lokales System oder Ersatzsystem) gewährleistet wird. Um diesbezüglich die Widerstandsfähigkeit zu erhöhen, erfolgt vorzugsweise ein kryptographisch geschütztes Wechseln zwischen der Instanz, die auf die IO-Schnittstelle Zugriff hat.

Vorteilhafte Ausgestaltungen und Weiterbildungen ergeben sich aus den weiteren Unteransprüchen sowie aus der Beschreibung unter Bezugnahme auf die Figuren der Zeichnung.

Bei einer möglichen Ausführungsform des erfindungsgemäßen Verfahrens zur Erhöhung der Verfügbarkeit einer Anlage besteht oder droht die Beeinträchtigung einer Betriebsfunktionsfähigkeit eines Anlagengerätes der Anlage aufgrund eines erkannten Cyberangriffes auf die betroffene Anlage.

Bei einer möglichen Ausführungsform des erfindungsgemäßen Verfahrens zur Erhöhung der Verfügbarkeit einer Anlage besteht oder droht die Beeinträchtigung einer Betriebsfunktionsfähigkeit eines Anlagengerätes der Anlage aufgrund eines erkannten Virusbefalls einer Software, die auf dem Anlagengerät der Anlage oder auf einer physikalischen speicherprogrammierbaren Steuerung (PLC) der Anlage ausgeführt wird.

Bei einer möglichen Ausführungsform des erfindungsgemäßen Verfahrens zur Erhöhung der Verfügbarkeit einer Anlage besteht oder droht die Beeinträchtigung einer Betriebsfunktionsfähigkeit eines Anlagengerätes der Anlage aufgrund einer Wartungsmaßnahme an der Anlage.

Bei einer möglichen Ausführungsform des erfindungsgemäßen Verfahrens zur Erhöhung der Verfügbarkeit einer Anlage umfasst die Wartungsmaßnahme ein Software-Update einer Software, die von einem Controller eines Anlagengerätes der Anlage oder von einer physikalischen speicherprogrammierbaren Steuerung (PLC) der Anlage ausgeführt wird.

Bei einer möglichen Ausführungsform des erfindungsgemäßen Verfahrens zur Erhöhung der Verfügbarkeit einer Anlage werden die Betriebsfunktionen des jeweils betroffenen Anlagengerätes und/oder die Betriebsfunktionen von weiteren oder von allen übrigen Anlagengeräten der betroffenen Anlage durch mindesten eine virtuelle speicherprogrammierbare Steuerung (vPLC) des mit der Anlage über ein Gateway verbundenen Backup-Systems automatisch übernommen sobald eine bestehende oder drohende Beeinträchtigung einer Betriebsfunktionsfähigkeit mindestens eines Anlagengerätes der im Betrieb befindlichen Anlage erkannt worden ist.

Bei einer möglichen Ausführungsform des erfindungsgemäßen Verfahrens zur Erhöhung der Verfügbarkeit einer Anlage ist die Anlage eine industrielle Automatisierungsanlage, welche mehrere Automatisierungsgeräte aufweist, die während des laufenden Betriebes der Anlage über einen Steuerbus von mindestens einer physikalischen speicherprogrammierbaren Steuerung (PLC) der Anlage gesteuert werden, die eine Instanz eines Steuerprogams ausführt.

Bei einer möglichen Ausführungsform des erfindungsgemäßen Verfahrens zur Erhöhung der Verfügbarkeit einer Anlage wird von einer Steuerprogram-Instanz, die während des laufenden Betriebes von einer physikalischen speicherprogrammierbaren Steuerung (PLC) der Anlage oder von einem Controller eines Anlagengerätes der Anlage ausgeführt wird und Betriebsfunktionen von Anlagengeräten der Anlage steuert, automatisch und unterbrechungsfrei auf eine entsprechende Steuerprogram-Instanz gewechselt, die durch mindestens eine virtuelle speicherprogrammierbare Steuerung (vPLC) des mit der Anlage verbundenen Backup-Systems ausgeführt wird und die Betriebsfunktionen der jeweiligen Anlagengeräte der betroffenen Anlage steuert, sobald eine bestehende oder drohende Beeinträchtigung einer Betriebsfunktionsfähigkeit mindestens eines Anlagengerätes der im Betrieb befindlichen Anlage erkannt worden ist.

Bei einer möglichen Ausführungsform des erfindungsgemäßen Verfahrens zur Erhöhung der Verfügbarkeit einer Anlage erfolgt das Wechseln zwischen den beiden Steuerprogram-Instanzen kryptographisch geschützt.

Bei einer möglichen Ausführungsform des erfindungsgemäßen Verfahrens zur Erhöhung der Verfügbarkeit einer Anlage übernimmt die virtuelle speicherprogrammierbare Steuerung (vPLC) des mit der Anlage verbundenen Backup-Systems der Anlage vordefinierte Betriebsbasisfunktionen, die für den laufenden Betrieb der betroffenen Anlage essentiell sind, automatisch, sobald eine bestehende oder drohende Beeinträchtigung einer Betriebsfunktionsfähigkeit mindestens eines Anlagengerätes der im Betrieb befindlichen Anlage erkannt worden ist.

Bei einer möglichen Ausführungsform des erfindungsgemäßen Verfahrens zur Erhöhung der Verfügbarkeit einer Anlage werden die Betriebsfunktionen der betroffenen Anlage durch mindestens eine physikalische speicherprogrammierbare Steuerung (PLC) der Anlage oder durch einen Controller eines Anlagengerätes der Anlage von der virtuellen speicherprogrammierbaren Steuerung (vPLC) des mit der Anlage verbundenen Backup-Systems der Anlage zurückübernommen, sobald die Beeinträchtigung der Betriebsfunktionsfähigkeit des Anlagengerätes der Anlage aufgehoben ist.

Bei einer möglichen Ausführungsform des erfindungsgemäßen Backup-Systems zur Erhöhung der Verfügbarkeit einer Anlage ergibt sich die Beeinträchtigung der Betriebsfunktionsfähigkeit der betroffenen Anlage aufgrund eines erkannten Cyberangriffes auf die betroffene Anlage, aufgrund eines erkannten Virusbefalls einer Software, die auf einem Anlagengerät der Anlage oder auf einer physikalischen speicherprogrammierbaren Steuerung (PLC) der Anlage ausgeführt wird, oder aufgrund einer geplanten Wartungsmaßnahme an der Anlage.

Bei einer möglichen Ausführungsform des erfindungsgemäßen Backup-Systems zur Erhöhung der Verfügbarkeit einer Anlage ist das Backup-System mit einem Gateway der Anlage verbunden.

Bei einer möglichen Ausführungsform des erfindungsgemäßen Backup-Systems zur Erhöhung der Verfügbarkeit einer Anlage ist die virtuelle speicherprogrammierbare Steuerung (vPLC) auf einem Rechner des Backup-Systems gehosted.

Bei einer möglichen Ausführungsform des erfindungsgemäßen Backup-Systems zur Erhöhung der Verfügbarkeit einer Anlage weist die mit dem Backupsystem verbundene Anlage mehrere Anlagengeräte auf, die während des laufenden Betriebes der Anlage von Controllern der jeweiligen Anlagengeräte und/oder über einen lokalen Steuerbus von mindestens einer physikalischen speicherprogrammierbaren Steuerung (PLC) der Anlage gesteuert werden.

Bei einer möglichen Ausführungsform des erfindungsgemäßen Backup-Systems zur Erhöhung der Verfügbarkeit einer Anlage weist die Anlage eine Logistikanlage, eine Verkehrsanlage, eine Gebäudeanlage eine Automatisierungsanlage und/oder eine Produktionsanlage auf.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert.

Es zeigen dabei:
- Fig. 1: ein Ablaufdiagramm zur Darstellung einer möglichen Ausführungsform des erfindungsgemäßen Verfahrens;
- Fig. 2: ein Diagramm zur Darstellung einer möglichen Ausführungsform des erfindungsgemäßen Backup-Systems für eine Anlage.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

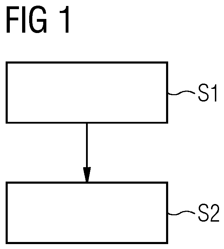

Das Ablaufdiagramm gemäß Fig.1 zeigt eine mögliche Ausführungsform des erfindungsgemäßen Verfahrens zur Erhöhung der Verfügbarkeit einer Anlage ANL. Das Verfahren umfasst bei dem dargestellten Ausführungsbeispiel im Wesentlichen zwei Hauptschritte S1, S2.

In einem ersten Schritt S1 erfolgt ein Erkennen einer bestehenden oder drohenden Beeinträchtigung einer Betriebsfunktionsfähigkeit mindestens eines Anlagengerätes der im Betrieb befindlichen Anlage ANL.

In einem weiteren Schritt S2 werden Betriebsfunktionen der von der Beeinträchtigung der Betriebsfunktionsfähigkeit betroffenen Anlage durch mindestens eine virtuelle speicherprogrammierbare Steuerung (vPLC) eines mit der Anlage verbundenen Backup-Systems übernommen ohne den laufenden Betrieb der Anlage ANL zu unterbrechen.

Eine oder mehrere virtuelle speicherprogrammierbare Steuerungen vPLCs können als Reserve mitlaufen. Die virtuellen speicherprogrammierbare Steuerungen vPLCs können entweder die Gesamtfunktion einer beeinträchtigten Automatisierungskomponente AK eines Anlagengerätes der Anlage ANL übernehmen, oder nur einen Teil der Funktionen (insbesondere essentielle Funktionen zum Aufrechterhalten des Betriebs) realisieren und zwischenzeitlich bereitstellen.

Eine virtuelle speicherprogrammierbare Steuerung vPLC beschreibt eine als Software realisierte Automatisierungskomponente zum Steuern eines Automatisierungsprozesses. Diese kann als Software-Komponente (App) auf einer offenen Rechner-Plattform wie z.B. einem Industrie-PC realisiert werden und kann beispielsweise als virtuelle Maschine VM oder als Container ausgebildet sein. Sie führt ein sog. Anwenderprogramm aus, welches die eigentliche Steuerungsaufgabe realisiert. So lässt sich eine PLC Funktionalität dynamisch / flexibel und je nach Bedarf auf einem Rechensystem erzeugen und ausführen.

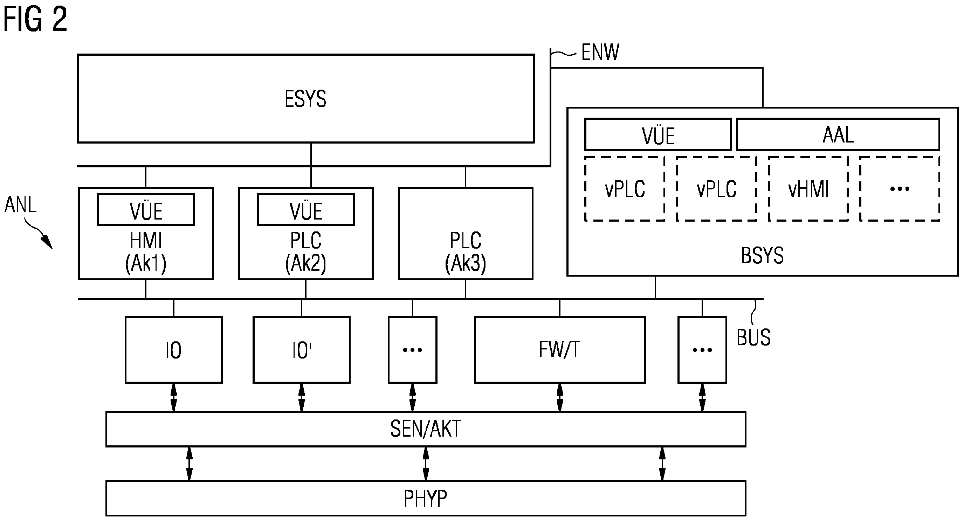

Fig.2 zeigt schematisch eine mögliche Ausführungsform eines Backup-Systems BSYS für eine Anlage ANL. Die Automatisierungsanlage ANL umfasst mehrere Automatisierungskomponenten AK (z.B. PLC, HMI, Remote IO), die in einem Automatisierungsnetzwerk miteinander verbunden sind. Ein Anlagengerät der Anlage ANL kann eine oder mehrere Automatisierungskomponenten AK aufweisen. Die Automatisierungskomponenten AKs der Anlage ANL kommunizieren über einen Steuer- und Datenbus BUS, insbesondere über einen Feldbus entsprechend einem Feldbus-Protokoll (z.B. Profinet), und steuern einen physikalischen Prozess PHYP innerhalb der Anlage ANL. Bei dem in Fig.2 dargestellten Ausführungsbeispiel kommunizieren die Automatisierungskomponenten AKs über den Steuer - und Datenbus BUS und Fernsteuerung-(Remote) IO- Schnittstellen oder sonstige Steuerelemente (wie z.B. Frequenzwandler FW oder Treiber T) mit Sensoren SEN und/der Aktuatoren AKT zur Steuerung eines physikalischen Prozesses PHYP innerhalb der Anlage ANL. Die Aktuatoren AKT sind beispielsweise Motoren oder steuerbare Ventile innerhalb der Anlage ANL.

Fig. 2 zeigt zudem ein Engineering-System ESYS. Das Engineering-System ESYS dient zur Projektierung der Automatisierungskomponenten AK der Anlage ANL. Hierbei können die Automatisierungskomponenten AK der Anlage ANL programmiert und konfiguriert werden.

Das in Fig. 2 dargestellte Backup-System BSYS ist zur Ausführung bzw. Verwaltung einer oder mehrerer virtualisierter Automatisierungsfunktionen (PLC, HMI, Feldbuskommunikation usw.) vorgesehen und dient dazu die Verfügbarkeit der überwachten Anlage ANL zu erhöhen. Es wird dabei der aktuelle Verfügbarkeitszustand von Automatisierungskomponenten AKs der Anlage ANL mittels einer Verfügbarkeitssicherstellungslogik AAL (Availability Assurance Logic) überwacht. Das Backup-System BSYS ist mit dem Automatisierungsnetzwerk der Anlage ANL verbunden. Bei dem in Fig.2 dargestellten Ausführungsbeispiel ist das Backup-System BSYS an eine Factory Automation Engineering Netzwerk ENW der Anlage ANL angeschlossen. Das Backup-System BSYS kann auch an den Steuer- und Datenbus BUS der Anlage ANL angeschlossen sein. Wie in Fig.2 dargestellt ist.

Das Backup-System BSYS kann mindestens einen Server für virtualisierte (Backup) Automatisierungsfunktionen (vPLC, vHMI...) aufweisen. Die Überwachung und Erkennung einer möglichen Verfügbarkeitseinschränkung kann beispielsweise ausgehend von dem Server des Backup-Systems BSYS durchgeführt werden. Alternativ kann die Überwachung und Erkennung einer möglichen Verfügbarkeitseinschränkung durch die Automatisierungskomponenten AK selbst erfolgen. Bei Erkennung einer Verfügbarkeitseinschränkung können die betroffenen Automatisierungskomponenten AK dies an den Server des Backup-Systems BSYS signalisieren. Einige der Automatisierungskomponenten AK der Anlage ANL können eine integrierte Verfügbarkeitsüberwachungseinheit VÜE aufweisen, wie in Fig.2 schematisch dargestellt ist.

Bei einer möglichen Ausführungsform des erfindungsgemäßen Verfahrens zur Erhöhung der Verfügbarkeit einer Anlage besteht oder droht die Beeinträchtigung einer Betriebsfunktionsfähigkeit eines Anlagengerätes der Anlage ANL aufgrund eines erkannten Cyberangriffes auf die betroffene Anlage ANL. Ein Cyberangriff kann bei einer möglichen Ausführungsform durch das Überwachen des Netzwerkverkehrs (z.B. SYN-Flooding, Häufigkeit bestimmter Verbindungsanfragen) erkannt werden. Weiterhin lässt sich ein Cyberangriff auch durch Überwachung von auf dem System laufenden Prozessen und ihrer Ressourcennutzung (z.B. RAM, CPU, Netzwerkbandbreite) erkennen. Eine weitere Möglichkeit zur Erkennung von Cyberangriffen bieten Integritätsprüfungen von Software und Konfiguration oder das Detektieren auffälliger Verhaltensmuster in dem Netzwerkverkehr oder bei Applikationsaktionen (z.B. ausgeführte Systemaufrufe).

Bei einer möglichen Ausführungsform des erfindungsgemäßen Verfahrens zur Erhöhung der Verfügbarkeit einer Anlage besteht oder droht die Beeinträchtigung einer Betriebsfunktionsfähigkeit eines Anlagengerätes der Anlage ANL aufgrund eines erkannten Virusbefalls einer Software, die auf dem Anlagengerät der Anlage oder auf einer physikalischen speicherprogrammierbaren Steuerung (PLC) der Anlage ANL ausgeführt wird. Ein Virusbefall kann ebenfalls durch das Überwachen des Netzwerkverkehrs (SYN-Flooding, Häufigkeit bestimmter Verbindungsanfragen), Überwachung von auf dem System laufenden Prozessen und ihrer Ressourcennutzung (RAM, CPU, Netzwerkbandbreite), durch Integritätsprüfungen von Software und Konfiguration, durch Detektion auffälliger Verhaltensmuster in dem Netzwerkverkehr oder bei Applikationsaktionen (z.B. ausgeführte Systemaufrufe) erkannt werden.

Es werden bei dem erfindungsgemäßen Verfahren vor allem solche Arten von Befall überwacht, die zu Einschränkungen der Verfügbarkeit der Anlage ANL (insbesondere der essenziellen Funktionen) führen und/oder die eine gewollte Fehlfunktion erzeugen (Integrität).

Bei einer möglichen Ausführungsform des erfindungsgemäßen Verfahrens zur Erhöhung der Verfügbarkeit einer Anlage besteht oder droht die Beeinträchtigung einer Betriebsfunktionsfähigkeit eines Anlagengerätes der Anlage ANL aufgrund einer Wartungsmaßnahme an der Anlage. Die Wartungsmaßnahme kann ein Software-Update einer Software umfassen, die von einem Controller eines Anlagengerätes der Anlage ANL oder von einer physikalischen speicherprogrammierbaren Steuerung (PLC) der Anlage ANL ausgeführt wird.

Die Betriebsfunktionen des jeweils betroffenen Anlagengerätes und/oder die Betriebsfunktionen von weiteren oder von allen übrigen Anlagengeräten der betroffenen Anlage ANL können durch mindestens eine virtuelle speicherprogrammierbare Steuerung (vPLC) des mit der Anlage ANL über ein Gateway verbundenen Backup-Systems BSYS automatisch übernommen werden sobald eine bestehende oder drohende Beeinträchtigung einer Betriebsfunktionsfähigkeit mindestens eines Anlagengerätes der im Betrieb befindlichen Anlage ANL erkannt worden ist.

Das Backup-System BSYS kann einen IPC / Server PC aufweisen, auf dem virtualisierte Automatisierungskomponenten (insbesondere virtualisierte PLC / vPLC) bei Bedarf geladen und ausgeführt werden können. Der IPC / Server PC, auf dem die virtuelle speicherprogrammierbare Steuerung vPLC läuft (z.B. als VM, Container, nativer Prozess, ...), ist netzwerktechnisch mit den entsprechenden Komponenten, mit denen die beeinträchtigte Automatisierungskomponente AK normalerweise kommuniziert, verbunden. So kann sie z.B. Steuerungsaufgaben übernehmen, indem sie mit den entsprechenden Remote IO Komponenten kommuniziert.

Bei einer möglichen Ausführungsform des erfindungsgemäßen Verfahrens zur Erhöhung der Verfügbarkeit einer Anlage ist die Anlage ANL eine industrielle Automatisierungsanlage. Die Automatisierungsanlage weist mehrere Automatisierungsgeräte auf, die während des laufenden Betriebes der Anlage über einen Steuerbus von mindestens einer physikalischen speicherprogrammierbaren Steuerung (PLC) der Anlage gesteuert werden, die eine Instanz eines Steuerprogams ausführt. Die Anlage ANL weist z.B. mehrere Sensoren SEN und Aktoren AKT auf. Diese sind entweder direkt mit der physikalischen speicherprogrammierbaren Steuerung PLC verbunden, oder mit dedizierten IO Geräten, die wiederum mit einer physikalischen speicherprogrammierbaren Steuerung PLC über ein Feldbusprotokoll (z.B. PROFINET) verbunden sind.

Bei einer möglichen Ausführungsform des erfindungsgemäßen Verfahrens zur Erhöhung der Verfügbarkeit einer Anlage ANL wird von einer Steuerprogram-Instanz, die während des laufenden Betriebes von einer physikalischen speicherprogrammierbaren Steuerung (PLC) der Anlage oder von einem Controller eines Anlagengerätes der Anlage ANL ausgeführt wird und Betriebsfunktionen von Anlagengeräten der Anlage ANL steuert, automatisch und unterbrechungsfrei auf eine entsprechende Steuerprogram-Instanz gewechselt, die durch mindestens eine virtuelle speicherprogrammierbare Steuerung (vPLC) des mit der Anlage ANL verbundenen Backup-Systems BSYS ausgeführt wird und die Betriebsfunktionen der jeweiligen Anlagengeräte der betroffenen Anlage ANL steuert, sobald eine bestehende oder drohende Beeinträchtigung einer Betriebsfunktionsfähigkeit mindestens eines Anlagengerätes der im Betrieb befindlichen Anlage ANL erkannt worden ist.

Ein Wechsel auf eine entsprechende Steuerprogram-Instanz beinhaltet bei einer möglichen Implementierung des erfindungsgemäßen Verfahrens:
- Starten einer oder mehrerer vPLC Instanzen, falls noch nicht vorhanden.
- Laden der einen oder mehreren vPLC Instanzen mit dem entsprechenden Anwenderprogramm bzw. mit einer Variante, in der mindestens die essentiellen Funktionen realisiert werden (in einer Variante können die essentiellen Funktionen z.B. über dedizierte Anwenderprogramme auf mehrere vPLCs übertragen werden, die diese dann unabhängig voneinander ausführen).
- Konfiguration der mit der beeinträchtigten PLC kommunizierenden IO Geräte, so dass diese auf eine Kommunikation mit der einen oder mehreren vPLCs vorbereitet werden (z.B. indem in Public Key / Zertifikat konfiguriert wird, mit dem die vPLCs dann authentisiert werden können, bevor diese als steuernde vPLCs durch das IO Modul akzeptiert werden -> "Verlässliches Umschalten" / "kryptographisch geschütztes Wechseln")
- Übernahme der Steuerungsfunktionalität durch die eine oder mehreren vPLCs,

Bei einer möglichen Ausführungsform des erfindungsgemäßen Verfahrens zur Erhöhung der Verfügbarkeit einer Anlage ANL erfolgt das Wechseln zwischen den beiden Steuerprogram-Instanzen kryptographisch geschützt. Dabei werden die neuen vPLCs als vertrauenswürdige Kommunikationspartner authentisiert, bevor IO Befehle / Daten mit ihnen ausgetauscht werden. Die entsprechenden Schlüssel / Zertifikate können entweder bei der Inbetriebnahme / Engineerung "vorprovisioniert" werden und bei einem Signal zum Wechseln fortan verwendet werden, oder bei Erkennen einer Beeinträchtigung können die entsprechenden Credentials durch ein übergeordnetes System erzeugt und verteilt werden.

Bei einer möglichen Ausführungsform des erfindungsgemäßen Verfahrens zur Erhöhung der Verfügbarkeit einer Anlage ANL übernimmt die virtuelle speicherprogrammierbare Steuerung (vPLC) des mit der Anlage ANL verbundenen Backup-Systems BSYS der Anlage vordefinierte Betriebsbasisfunktionen, die für den laufenden Betrieb der betroffenen Anlage ANL essentiell sind, automatisch, sobald eine bestehende oder drohende Beeinträchtigung einer Betriebsfunktionsfähigkeit mindestens eines Anlagengerätes der im Betrieb befindlichen Anlage erkannt worden ist. Die Betriebsbasisfunktionen können durch einen Automatisierungsingenieur während der Entwicklung oder während der Inbetriebnahme der Anlage ANL definiert werden. Betriebsbasisfunktionen können beispielsweise eine Regelungsfunktion für einen Druckbehälter / Ventil oder ein Steueralgorithmus für einen Bohrer umfassen.

Die Betriebsfunktionen der betroffenen Anlage ANL können durch mindestens eine physikalische speicherprogrammierbare Steuerung (PLC) der Anlage oder durch einen Controller eines Anlagengerätes der Anlage ANL von der virtuellen speicherprogrammierbaren Steuerung (vPLC) des mit der Anlage ANL verbundenen Backup-Systems BSYS der Anlage ANL zurückübernommen werden, sobald die Beeinträchtigung der Betriebsfunktionsfähigkeit des Anlagengerätes der Anlage ANL aufgehoben ist.

Die Erfindung schafft gemäß einem weiteren Aspekt das in Fig.2 beispielhaft dargestellte Backup-System BSYS zur Erhöhung der Verfügbarkeit mindestens einer Anlage ANL. Die überwachte Anlage ANL weist beispielsweise eine Logistikanlage, eine Verkehrsanlage, eine Gebäudeanlage eine Automatisierungsanlage und/oder eine Produktionsanlage auf. Die Anlage ANL weist mehrere Anlagengeräte auf, die während des laufenden Betriebes der Anlage von Controllern der jeweiligen Anlagengeräte und/oder über einen lokalen Steuerbus von mindestens einer physikalischen speicherprogrammierbaren Steuerung (PLC) der Anlage ANL gesteuert werden.

Das Backup-System BSYS weist mindestens eine virtuelle speicherprogrammierbare Steuerung (vPLC) auf. Diese ist dazu ausgelegt, die Steuerung von Betriebsfunktionen der Anlage ANL nahtlos und kryptografisch geschützt zu übernehmen ohne den laufenden Betrieb der Anlage ANL zu unterbrechen, sobald eine bestehende oder drohende Beeinträchtigung einer Betriebsfunktionsfähigkeit der jeweiligen Anlage ANL erkannt wird. Die virtuelle speicherprogrammierbare Steuerung (vPLC) wird auf einem Rechner des Backup-Systems BSYS gehosted.

Bei einer möglichen Ausführungsform ergibt sich die bestehende oder drohende Beeinträchtigung der Betriebsfunktionsfähigkeit der betroffenen Anlage ANL aufgrund eines erkannten Cyberangriffes auf die betroffene Anlage. Weiterhin kann sich die Beeinträchtigung der Betriebsfunktionsfähigkeit der betroffenen Anlage ANL aufgrund eines erkannten Virusbefalls einer Software ergeben, die auf einem Anlagengerät der Anlage ANL oder auf einer physikalischen speicherprogrammierbaren Steuerung (PLC) der Anlage ANL ausgeführt wird. Die Beeinträchtigung der Betriebsfunktionsfähigkeit der betroffenen Anlage ANL kann sich auch aufgrund einer geplanten Wartungsmaßnahme an der Anlage ANL ergeben.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Unabhängig vom grammatikalischen Geschlecht eines bestimmten Begriffes sind Personen mit männlicher, weiblicher oder anderer Geschlechteridentität mit umfasst.

### Bezugszeichenliste

- AAL: Verfügbarkeitssicherstellungslogik
- ANL: Anlage
- BSYS: Backup-System
- ESYS: Engineering System
- ENW: Engineering Netzwerk
- HMI: Human Machine Interface
- vHMI: virtualisiertes Human Machine Interface
- PLC: physikalische speicherprogrammierbare Steuerung
- vPLC: virtualisierte physikalische speicherprogrammierbare Steuerung
- VÜU: Verfügbarkeitsüberwachungseinheit
- PHYP: physikalischer Prozess
- SEN: Sensor
- AKT: Aktuator
- FW: Frequenzwandler
- T: Treiber
- S1-S2: Verfahrensschritte

## Patentansprüche

1. Verfahren zur Erhöhung der Verfügbarkeit einer Anlage (ANL), mit den Schritten:
Erkennen (S1) einer bestehenden oder drohenden Beeinträchtigung einer Betriebsfunktionsfähigkeit mindestens eines Anlagengerätes der im Betrieb befindlichen Anlage (ANL); und
Übernehmen (S2) von Betriebsfunktionen der von der Beeinträchtigung der Betriebsfunktionsfähigkeit betroffenen Anlage (ANL) durch mindestens eine virtuelle speicherprogrammierbare Steuerung (vPLC) eines mit der Anlage (ANL) verbundenen Backup-Systems (BSYS) ohne den laufenden Betrieb der Anlage (ANL) zu unterbrechen.

2. Verfahren nach Anspruch 1, wobei die Beeinträchtigung einer Betriebsfunktionsfähigkeit eines Anlagengerätes der Anlage aufgrund eines erkannten Cyberangriffes auf die betroffene Anlage besteht oder droht.

3. Verfahren nach einem der vorangehenden Ansprüche, wobei die Beeinträchtigung einer Betriebsfunktionsfähigkeit eines Anlagengerätes der Anlage aufgrund eines erkannten Virusbefalls einer Software besteht oder droht, die auf dem Anlagengerät der Anlage oder auf einer physikalischen speicherprogrammierbaren Steuerung (PLC) der Anlage ausgeführt wird.

4. Verfahren nach einem der vorangehenden Ansprüche, wobei die Beeinträchtigung einer Betriebsfunktionsfähigkeit eines Anlagengerätes der Anlage aufgrund einer Wartungsmaßnahme an der Anlage besteht oder droht.

5. Verfahren zur Erhöhung der Verfügbarkeit einer Anlage nach Anspruch 4, wobei die Wartungsmaßnahme ein Software-Update einer Software umfasst, die von einem Controller eines Anlagengerätes der Anlage oder von einer physikalischen speicherprogrammierbaren Steuerung (PLC) der Anlage ausgeführt wird.

6. Verfahren nach einem der vorangehenden Ansprüche, wobei sobald eine bestehende oder drohende Beeinträchtigung einer Betriebsfunktionsfähigkeit mindestens eines Anlagengerätes der im Betrieb befindlichen Anlage erkannt worden ist, die Betriebsfunktionen des jeweils betroffenen Anlagengerätes und/oder die Betriebsfunktionen von weiteren oder von allen übrigen Anlagengeräten der betroffenen Anlage durch mindesten eine virtuelle speicherprogrammierbare Steuerung (vPLC) des mit der Anlage über ein Gateway verbundenen Backup-Systems automatisch übernommen werden.

7. Verfahren nach einem der vorangehenden Ansprüche, wobei die Anlage eine industrielle Automatisierungsanlage ist, welche mehrere Automatisierungsgeräte aufweist, die während des laufenden Betriebes der Anlage über einen Steuerbus von mindestens einer physikalischen speicherprogrammierbaren Steuerung (PLC) der Anlage gesteuert werden, die eine Instanz eines Steuerprogams ausführt.

8. Verfahren nach einem der vorangehenden Ansprüche, wobei, sobald eine bestehende oder drohende Beeinträchtigung einer Betriebsfunktionsfähigkeit mindestens eines Anlagengerätes der im Betrieb befindlichen Anlage erkannt worden ist, von einer Steuerprogram-Instanz, die während des laufenden Betriebes von einer physikalischen speicherprogrammierbaren Steuerung (PLC) der Anlage oder von einem Controller eines Anlagengerätes der Anlage ausgeführt wird und Betriebsfunktionen von Anlagengeräten der Anlage steuert, automatisch und unterbrechungsfrei auf eine entsprechende Steuerprogram-Instanz gewechselt wird, die durch mindestens eine virtuelle speicherprogrammierbare Steuerung (vPLC) des mit der Anlage verbundenen Backup-Systems ausgeführt wird und die Betriebsfunktionen der jeweiligen Anlagengeräte der betroffenen Anlage steuert.

9. Verfahren nach Anspruch 8, wobei das Wechseln zwischen den beiden Steuerprogram-Instanzen kryptographisch geschützt erfolgt.

10. Verfahren nach einem der vorangehenden Ansprüche, wobei die virtuelle speicherprogrammierbare Steuerung (vPLC) des mit der Anlage verbundenen Backup-Systems der Anlage vordefinierte Betriebsbasisfunktionen, die für den laufenden Betrieb der betroffenen Anlage essentiell sind, automatisch übernimmt, sobald eine bestehende oder drohende Beeinträchtigung einer Betriebsfunktionsfähigkeit mindestens eines Anlagengerätes der im Betrieb befindlichen Anlage erkannt worden ist.

11. Verfahren nach einem der vorangehenden Ansprüche, wobei die Betriebsfunktionen der betroffenen Anlage durch mindestens eine physikalische speicherprogrammierbare Steuerung (vPLC) der Anlage oder durch einen Controller eines Anlagengerätes der Anlage von der virtuellen speicherprogrammierbaren Steuerung (vPLC) des mit der Anlage verbundenen Backup-Systems der Anlage zurückübernommen wird, sobald die Beeinträchtigung der Betriebsfunktionsfähigkeit des Anlagengerätes der Anlage aufgehoben ist.

12. Backup-System (BSYS) zur Erhöhung der Verfügbarkeit mindestens einer Anlage (ANL), insbesondere unter Verwendung eines Verfahrens gemäß einem der Ansprüche 1 bis 11, wobei das Backup-System (BSYS) aufweist:
mindestens eine virtuelle speicherprogrammierbare Steuerung (vPLC), die dazu ausgelegt ist, die Steuerung von Betriebsfunktionen einer jeweiligen Anlage (ANL) nahtlos zu übernehmen, ohne den laufenden Betrieb der jeweiligen Anlage (ANL) zu unterbrechen, sobald eine bestehende oder drohende Beeinträchtigung einer Betriebsfunktionsfähigkeit der jeweiligen Anlage (ANL) erkannt wird.

13. Backup-System nach Anspruch 12, wobei sich die Beeinträchtigung der Betriebsfunktionsfähigkeit der betroffenen Anlage (ANL) ergibt aufgrund eines erkannten Cyberangriffes auf die betroffene Anlage, aufgrund eines erkannten Virusbefalls einer Software, die auf einem Anlagengerät der Anlage (ANL) oder auf einer physikalischen speicherprogrammierbaren Steuerung (PLC) der Anlage ausgeführt wird, oder aufgrund einer geplanten Wartungsmaßnahme an der Anlage (ANL).

14. Backup-System nach einem der Ansprüche 12 oder 13, wobei das Backup-System mit einem Gateway der Anlage (ANL) verbunden ist.

15. Backupsystem nach einem der Ansprüche 12 bis 14, wobei die virtuelle speicherprogrammierbare Steuerung (vPLC) auf einem Rechner des Backup-Systems (BSYS) gehosted ist.

16. Backupsystem nach einem der Ansprüche 12 bis 15, wobei die mit dem Backupsystem (BSYS) verbundene Anlage (ANL) mehrere Anlagengeräte aufweist, die während des laufenden Betriebes der Anlage von Controllern der jeweiligen Anlagengeräte und/oder über einen lokalen Steuerbus von mindestens einer physikalischen speicherprogrammierbaren Steuerung (PLC) der Anlage (ANL) gesteuert werden.

17. Backupsystem nach einem der Ansprüche 12 bis 16, wobei die Anlage (ANL) eine Logistikanlage, eine Verkehrsanlage, eine Gebäudeanlage eine Automatisierungsanlage und/oder eine Produktionsanlage aufweist.
